# EUROPÄISCHE PATENTSCHRIFT

(11) **EP 2 813 315 B1**
(45) Veröffentlichungstag und Bekanntmachung des Hinweises auf die Patenterteilung: **04.01.2017**
(21) Anmeldenummer: 14001912.6
(22) Anmeldetag: 03.06.2014
(51) Int. Cl.: B23K 37/02, B25H 1/12

(54) **SCHWEISSVORRICHTUNG**
WELDING DEVICE
DISPOSITIF DE SOUDAGE

(30) Priorität: 11.06.2013 DE 102013009681
(43) Veröffentlichungstag der Anmeldung: 17.12.2014
(73) Patentinhaber: Eisenmann SE, 71032 Böblingen (DE)
(72) Erfinder: Dückminor, Miriam, 71155 Altdorf (DE); Eberwein, Nils, 71111 Waldenbuch (DE); Gross, Felix, 71032 Böblingen (DE); Ruthardt, Kai, 70567 Stuttgart (DE); Schmidt, Paul-Jonathan, 72076 Tübingen (DE); Schneid, Sandra, 71083 Herrenberg (DE); Schneider, Moritz, 71067 Sindelfingen (DE); Wegener, Manuel, 71088 Holzgerlingen (DE)
(74) Vertreter: Heinrich, Hanjo

(56) Entgegenhaltungen:
- WO-A1-2013/068830
- DE-A1- 3 909 256

## Beschreibung

Die Erfindung betrifft eine Schweißvorrichtung mit einem Fahrwerk, welches Laufrollen lagert, auf denen die Schweißvorrichtung verfahrbar ist,
wobei
die Schweißvorrichtung aus mehreren Bauteilen aufgebaut ist, die in einer Betriebskonfiguration der Schweißvorrichtung einen Arbeitsbereich definieren und zumindest bereichsweise begrenzen und derart beweglich gelagert sind, dass die Bauteile jeweils zwischen einer Transportstellung und einer Betriebsstellung verstellbar sind.

Eine mobile Schweißvorrichtung ist beispielsweise aus der DE 39 09 256 A1 bekannt. Die dort beschriebene mobile Schweißvorrichtung ist dafür gedacht, innerhalb einer Werkshalle von einer Arbeitsstelle zu einer anderen verfahren zu werden.

Ein anderer Aspekt für mobile Schweißvorrichtungen besteht darin, den Schweißvorgang für Schulungs- oder Präsentationszwecke einem Publikum zugänglich zu machen, wie es beispielsweise bei einer aus der WO 2013/068830 A1 bekannten Schweißvorrichtung der eingangs genannten Art der Fall ist. Dadurch, dass bewegliche Bauteile vorhanden sind, wird die Möglichkeit eröffnet, dass das Transportvolumen der Schweißvorrichtung gegenüber dem Raumbedarf verringert werden kann, den die Schweißvorrichtung in ihrer Betriebskonfiguration hat.

In solchen Fällen werden mobile Schweißvorrichtungen nicht nur innerhalb einer Werkshalle verfahren, sondern von einem Ort zu einem anderen transportiert, beispielsweise von einer Messeveranstaltung zu einem Ort, an dem ein Schulungsseminar stattfindet.

Bekannte mobile Schweißvorrichtungen sind insgesamt recht sperrig, wodurch deren Handhabung und Transport erschwert ist. Dabei ist zu beachten, dass eine mobile Schweißvorrichtung einen Arbeitsbereich mit einer Mindestgröße zur Verfügung stellen muss, so dass eine Person in und an der Schweißvorrichtung ungestört agieren kann.

Es ist Aufgabe der Erfindung, eine Schweißvorrichtung der eingangs genannten Art zu schaffen, welche diesen Gedanken Rechnung trägt.

Diese Aufgabe wird bei einer Schweißvorrichtung der eingangs genannten Art dadurch gelöst, dass
die beweglichen Bauteile eine Schutzscheibe umfassen, welche in eine Transportstellung absenkbar und in eine Betriebsstellung anhebbar ist, in der sie einen Schweißbereich teilweise umgibt.

Vorzugsweise ist die Schutzscheibe getönt. So können mehrere Personen den Schweißvorgang, der im Schweißbereich der Schweißvorrichtung durchgeführt wird, durch die Schutzscheibe hindurch verfolgen, ohne dass sie eine Schutzmaske tragen müssen.

Dabei ist es günstig, wenn wenigstens eines der beweglichen Bauteile in seiner Betriebsstellung über die lichte Kontur des Fahrwerks hinausragt und in seiner Transportstellung innerhalb der lichten Kontur des Fahrwerks angeordnet ist.

Wenn die Schutzscheibe in ihrer Transportstellung in einem Aufnahmegehäuse untergebracht ist, aus welchem sie in ihre Betriebsstellung herausfahrbar ist, ist ein Transportschutz für die Schutzscheibe sichergestellt.

Im Hinblick auf Stauraum, der für Kleingeräte und/oder Dokumente oder dergleichen benötigt wird, ist es vorteilhaft, wenn die beweglichen Bauteile wenigstens ein Regalmodul umfassen.

Insbesondere bei einem verhältnismäßig großen Regalmodul ist es von Vorteil, wenn diese in seiner Betriebsstellung über die lichte Kontur des Fahrwerks hinausragt und in seiner Transportstellung innerhalb der lichten Kontur des Fahrwerks angeordnet ist, wie es oben bereits allgemein erläutert wurde.

Besonders effektiv ist es, wenn die beweglichen Bauteile ein verschwenkbar gelagertes Bodenpodest umfassen. Der Stand-und Bewegungsbereich für eine Person, die in oder an der Schweißvorrichtung tätig ist, nimmt flächenmäßig in der Regel den größten Teil des Arbeitsbereiches in Anspruch. Das Bodenpodest begrenzt einen Großteil des Arbeitsbereichs, wenn das Bodenpodest in seine Betriebsstellung bewegt wird. Die von der Schweißvorrichtung in der Horizontalen benötigte Fläche wird auf vorteilhafte Weise beträchtlich kleiner, wenn das Bodenpodest aus seiner Betriebsstellung in seine Transportstellung bewegt wird.

Es ist günstig, wenn das Bodenpodest an dem Fahrwerk um eine horizontale Achse verschwenkbar gelagert ist. Hierdurch kann es z.B. in eine Transportstellung verschwenkt werden, in der das Bodenpodest in einer vertikalen Ebene verläuft.

Im Hinblick auf die Arbeitssicherheit ist vorteilhaft ein Geländerbügel vorgesehen, der mit dem Bodenpodest verbunden oder lösbar mit dem Bodenpodest verbindbar ist. Im ersten Fall kann der Geländerbügel z.B. auch als Klappbügel ausgebildet sein und seinerseits zwischen einer eingeklappten Transportstellung und einer ausgeklappten Betriebsstellung bewegt werden. Im zweiten Fall kann der Geländerbügel zum Transport abgenommen und anderweitig verstaut werden. Vorzugsweise kann das Bodenpodest den Geländerbügel aufnehmen.

Es ist günstig, wenn die Bauteile einen Sichtgürtel umfassen, welcher in seiner Betriebsstellung derart angeordnet ist, dass von außen der Blick auf das Fahrwerk und die Laufrollen verhindert ist. Dies kann einerseits zu einer ästhetischen optischen Wirkung beitragen, da die Schweißvorrichtung in ihrer Betriebsstellung insgesamt aus "einem Guss" erscheint. Andererseits sind das Fahrwerk und die Laufrollen vor äußeren Einflüssen geschützt.

Der Sichtgürtel kann einfacher verstellt werden, wenn er mindestens zwei Gürtelteile umfasst.

Die Schweißvorrichtung kann sicher positioniert werden, wenn eine Bremseinrichtung vorhanden ist, durch welche die Schweißvorrichtung an einem Standort fixierbar ist, wenn sich die Schweißvorrichtung in ihrer Transportkonfiguration befindet.

Dabei ist es günstig, wenn die Bremseinrichtung einen Stützstempel umfasst, der anhebbar oder absenkbar gelagert ist. Wenn die Schweißvorrichtung in einer vorgegebenen Position derart fixiert ist, können die beweglichen Bauteile sicher in ihre Betriebsstellung gebracht werden, ohne dass die Gefahr besteht, dass sich die Schweißvorrichtung als solche bewegt.

Eine Platz sparende Anordnung des Stützstempels wird erreicht, wenn dieser an dem Fahrwerk innerhalb von dessen lichter Kontur gelagert ist.

Es ist günstig, wenn der Stützstempel mittels eines Kurbelmechanismus anhebbar oder absenkbar ist. Durch einen solchen Mechanismus ist eine gute Kraftübertragung insbesondere bei einer manuellen Betätigung gewährleistet.

Damit der Kurbelmechanismus gut von Hand erreicht und betätigt werden kann, ist es günstig, wenn er eine Handkurbel umfasst, welche über die lichte Kontur des Fahrwerks hinausragt.

Es ist außerdem günstig, wenn die Schweißvorrichtung Absaugmittel oder ein Absaugsystem mit sich führt. In diesem Fall muss am Betriebsort nicht eine Absaugmöglichkeit vorgehalten werden.

Im Hinblick auf Schulungen und Präsentationen ist es besonders günstig, wenn ein Kamerasystem vorhanden ist, mittels dessen Aufnahmen von einem Schweißbereich erzeugbar sind. So können die Schweißarbeiten mehr Personen gezeigt werden, als um die Schweißvorrichtung herum stehen können.

Nachfolgend werden Ausführungsbeispiele der Erfindung anhand der Zeichnungen näher erläutert. In diesen zeigen:
- Figur 1: eine Ansicht von schräg hinten auf eine mobile Schweißstation in einer Betriebskonfiguration, bei der vorhandene bewegliche Bauteile eine jeweilige Betriebsstellung einnehmen;
- Figur 2: eine Ansicht von schräg unten auf die mobile Schweißstation, wobei ein Fahrwerk mit Laufrollen und einer Bremseinrichtung zu erkennen ist;
- Figur 3: eine Ansicht von schräg vorne auf die mobile Schweißstation, wobei ein Gürtelteil eines Sichtgürtels eine Transportstellung einnimmt;
- Figur 4: eine Ansicht von schräg hinten auf die mobile Schweißstation, wobei eine Schutzscheibe nun in einer Transportstellung gezeigt ist;
- Figur 5: eine Ansicht von schräg hinten auf die mobile Schweißstation, wobei nun außerdem zwei Regalmodule und ein Bodenpodest in einer jeweiligen Transportstellung gezeigt sind;
- Figur 6: einer Ansicht von schräg hinten auf eine abgewandelte mobile Schweißstation, welche außerdem noch ein Absaugsystem und ein Kamerasystem umfasst;
- Figur 7: eine der Figur 1 entsprechende Ansicht von schräg vorne auf die abgewandelte mobile Schweißstation.

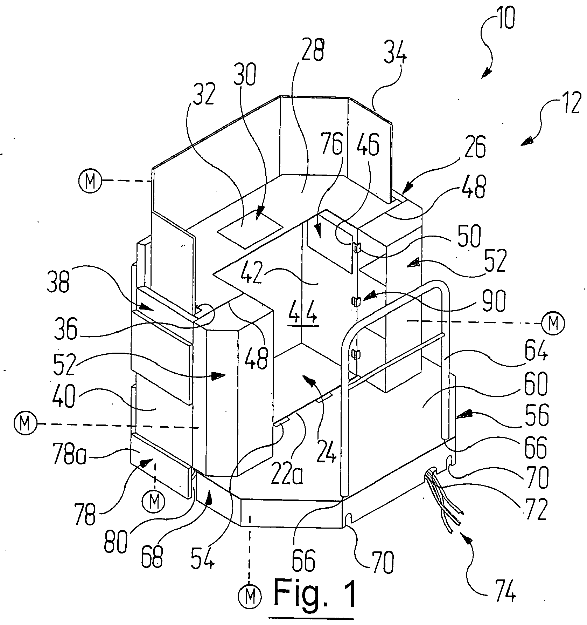

In den Figuren 1 bis 5 ist als erstes Ausführungsbeispiel eine Schweißvorrichtung 10 gezeigt, die als mobile Schweißstation 12 ausgebildet ist, welche zwischen einer Betriebskonfiguration und einer Transportkonfiguration verstellt werden kann.

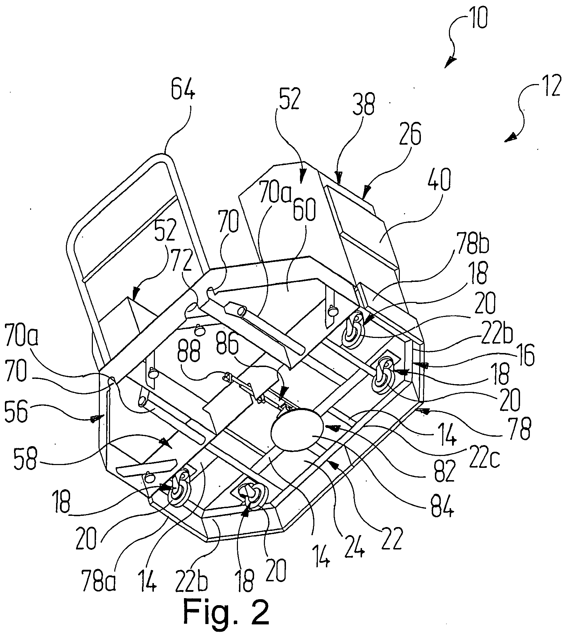

Wie Figur 2 zeigt, umfasst die Schweißstation 12 ein aus Stahlblechen 14 aufgebautes Fahrwerk 16, welches Laufrollen 18 lagert, so dass die Schweißstation 12 bodengebunden verfahren werden kann. Das Fahrwerk kann alternativ oder zusätzlich aus Stahlprofilen aufgebaut sein. Von den Stahlblechen 14 sind nur einige mit einem Bezugszeichen versehen. Beim vorliegenden Ausführungsbeispiel sind als Laufrollen 18 vier Lenkrollen 20 vorhanden, die sich in an und für sich bekannter Weise zur Bewegungsrichtung der Schweißstation 12 ausrichten können.

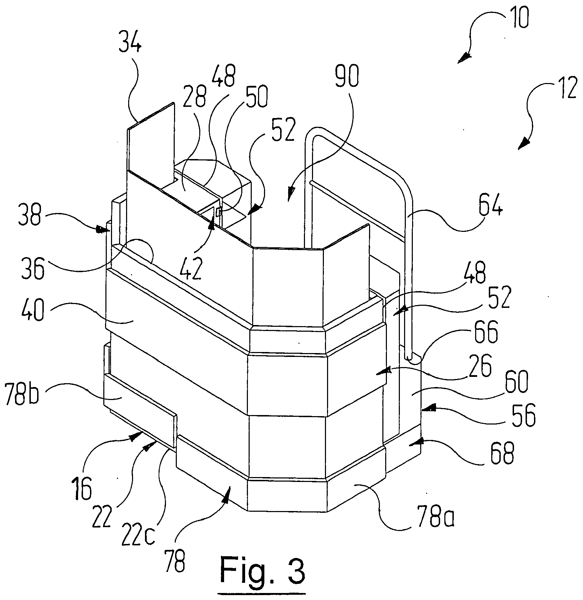

Das Fahrwerk 16 definiert eine lichte Außenkontur 22 mit einem geradlinigen hinteren Konturabschnitt 22a (siehe Figur 1), zwei gewinkelten seitlichen Konturabschnitten 22b (siehe Figur 2) und einem geradlinigen vorderen Konturabschnitt 22c (siehe Figuren 2 und 3). Beim vorliegenden Ausführungsbeispiel ist die lichte Außenkontur 22 durch eine Bodenplatte 24 des Fahrwerks 16 vorgegeben, welche auf der von den Laufrollen 18 abliegenden Seite an den Stahlblechen 14 angebracht ist.

Bei einer Abwandlung kann die äußere Begrenzung der Bodenplatte 24 auch innerhalb der lichten Außenkontur des Fahrwerks 16 liegen.

Das Fahrwerk 16 trägt einen Arbeitsaufbau 26 mit einer Arbeitsplatte 28, welche einen Schweißbereich 30 durch eine Kupferplatte 32 vorgibt. Der Arbeitsaufbau 26 umfasst eine getönte Schutzscheibe 34. Diese verläuft beim vorliegenden Ausführungsbeispiel nach innen versetzt parallel zu den beiden gewinkelten seitlichen Konturabschnitten 22b und dem geradlinigen vorderen Konturabschnitt 22c. Die Schutzscheibe 34 kann durch einen Schlitz 36 in der Arbeitsplatte 28, der entsprechend gewinkelt verläuft, in vertikaler Richtung in ein darunter angeordnetes Aufnahmegehäuse 38 in eine Transportstellung abgesenkt und aus diesem in eine Betriebsstellung herausgefahren werden, in der sie den Schweißbereich 30 teilweise umgibt.

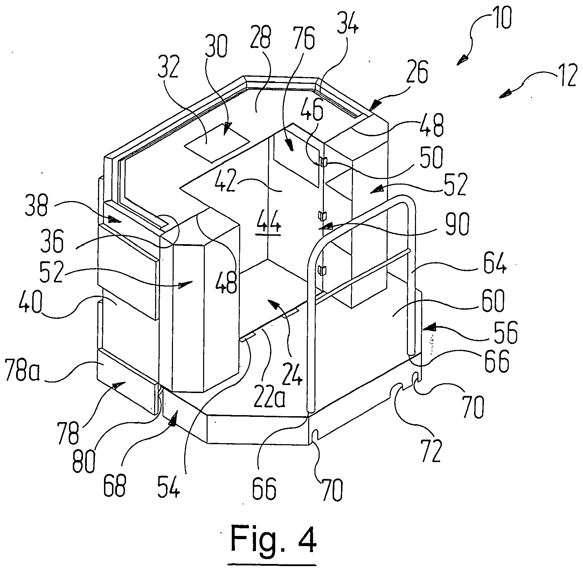

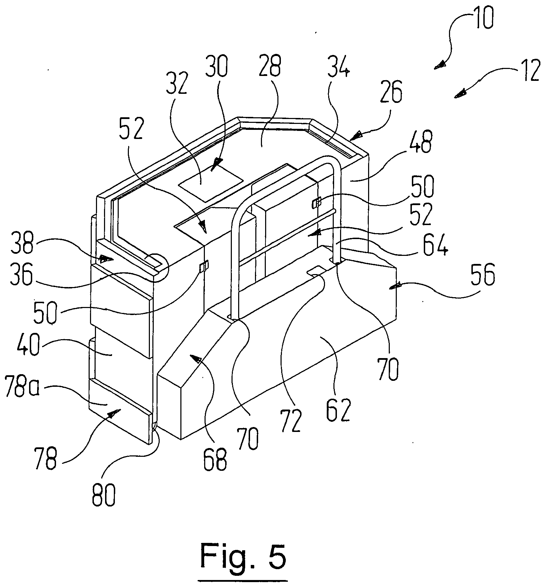

Dies kann manuell oder durch einen Stellmotor M erfolgen, der nur in Figur 1 angedeutet ist. Die Schutzscheibe 34 in ihrer Betriebsstellung zeigen die Figuren 1 und 3, wogegen die Figuren 4 und 5 die Transportstellung der Schutzscheibe 34 veranschaulichen, in welcher die Schutzscheibe 34 in dem Aufnahmegehäuse 38 untergebracht ist.

Die Außenseite des Aufnahmegehäuses 38 bildet zugleich eine Sichtblende 40 der Schweißstation 12, die beispielsweise mit einem Firmenlogo oder dergleichen versehen sein kann.

Unterhalb der beiden seitlichen Enden der Arbeitsplatte 28 ist jeweils ein Containerelement 42 angeordnet. Das Aufnahmegehäuse 40 für die Schutzscheibe 34 und die Containerelemente 42 begrenzen einen Innenbereich 44 der Schweißstation 12, von dem aus ein jeweiliger Nutzraum 46 der Containerelemente 42 für eine Benutzerperson zugänglich ist.

Die Containerelemente 42 fluchten nach hinten mit dem hinteren Konturabschnitt 22c der lichten Außenkontur 22 des Fahrwerks 16 und tragen an ihrer dortigen Außenseite 48 jeweils über Scharniere 50 ein klappbares Regalmodul 52. Die Regalmodule 52 sind derart mit den Containerelementen 42 gekoppelt, dass sie in einer Betriebsstellung über die lichte Kontur 22 des Fahrwerks 16 hinausragen. Dabei liegen sie an den Außenseiten 48 der Containerelemente 42 an, wie es in den Figuren 1 bis 4 zu erkennen ist. In einer in Figur 5 gezeigten Transportstellung sind die Regalmodule 52 in den Innenbereich 44 der Schweißstation 12 eingeklappt. Die Bewegung der Regalmodule 52 zwischen der Betriebsstellung und der Transportstellung kann manuell oder durch Stellmotoren M erfolgen, die nur in Figur 1 angedeutet sind. Die Regalmodule 52 sind sowohl in ihrer Betriebs- als auch in ihrer Transportstellung durch Magnetschnapper arretiert, die nicht eigens gezeigt sind.

Die Regalmodule 52 sind dabei in ihrer Dimension und ihren Abmessungen so abgestimmt, dass sie in der Transportstellung innerhalb der lichten Kontur 22 des Fahrwerks 16 angeordnet sind. Beim vorliegenden Ausführungsbeispiel fluchten die Regalmodule 52 in ihrer Transportstellung mit einer Seitenwand mit dem hinteren Konturabschnitt 22c.

Dort ist außerdem über Scharniere 54 an dem Fahrwerk 16 ein um eine horizontale Achse verschwenkbares Bodenpodest 56 gelagert, welches eine Tragstruktur 58 (siehe Figur 2) umfasst, die auf einer Seite eine Trittplatte 60 trägt und auf der gegenüberliegenden Seite 62 offen ist.

In einer Betriebstellung, die in den Figuren 1 bis 4 zu erkennen ist, ist das Bodenpodest 56 heruntergeklappt und derart ausgerichtet, dass die Trittplatte 60 eine horizontale Weiterführung der Bodenplatte 24 des Fahrwerks 16 ist. Nach hinten ist das Bodenpodest 56 durch einen Geländerbügel 64 gesichert, welcher lösbar in komplementäre Einstecköffnungen 66 in der Trittplatte 60 eingesteckt ist.

Zwischen der Trittplatte 60 und der offen Seite 62 verläuft am freien Rand der Tragstruktur 58 eine Umlaufblende 68, die zwei Aufnahmeöffnungen 70 für den Geländerbügel 64 aufweist, in welche dieser für einen Transport eingeschoben werden kann. Zusätzlich ist der Geländerbügel 64 dann in zwei Führungen 70a eingeschoben, die axial mit den Aufnahmeöffnungen 70 fluchten.

Außerdem weist die Umlaufblende 68 einen Durchgang 72 auf, durch welchen elektrische Leitungen und Versorgungsleitungen in das Bodenpodest 56 und von dort zu den Containerelementen 42 geführt werden können, die nur in Figur 1 gezeigt und dort als Gruppe mit dem Bezugszeichen 74 versehen sind. In den Nutzräumen 46 der Containerelemente 42 können solche Einrichtungen 76 dauerhaft untergebracht sein, die für den jeweils gewünschten Schweißprozess, beispielsweise für WIG-oder MAG-Schweißen, notwendig sind. Die Versorgung mit Energie oder Arbeitsmedien erfolgt am Betriebsort dadurch, dass die entsprechenden Leitungen 74, die aus dem Durchgang 72 nach außen geführt sind, mit zugehörigen Quellen verbunden werden.

Wie in Figur 5 zu erkennen ist, kann das Bodenpodest 56 nach oben in eine Transportstellung verschwenkt werden, in der die Trittplatte 60 gegen die Außenseite 48 der Containerelemente 42 und die Seitenwände 52a der Regalmodule 52 an, die hierfür zuvor in ihre Transportstellung gebracht werden müssen. Eine Arretierung kann dann wieder durch nicht eigens gezeigte Magnetschnapper oder alternativ oder ergänzend beispielsweise durch Klemmriegel erfolgen. Die Außenseite 48 der Containerelemente 42 ist offen, so dass von dort Haltelemente an dem Bodenpodest 56 angreifen und dieses in seiner Transportstellung halten können.

Die Bewegung des Bodenpodests 56 zwischen der Betriebsstellung und der Transportstellung kann wieder manuell oder durch einen Stellmotor M erfolgen, der erneut nur in Figur 1 angedeutet ist.

An den seitlichen Konturabschnitten 22b und dem vorderen Konturabschnitt 22c trägt das Fahrwerk 16 außerdem noch einen Sichtgürtel 78, der beim vorliegenden Ausführungsbeispiel zwei Gürtelteile 78a, 78b umfasst, die jeweils zwischen einer angehobenen Transportstellung und einer abgesenkten Betriebsstellung bewegt werden können. Hierzu sind die Gürtelteile 78a, 78b über selbst tragende Schnappscharniere 80 an das Fahrwerk 16 angelenkt, wie sie an und für sich bekannt sind und von denen nur in den Figuren 1, 4 und 5 lediglich eines zu erkennen ist. Die angehobene Transportstellung ist nur in Figur 3 und dort lediglich bei dem Gürtelteil 78b veranschaulicht. In der Betriebsstellung sind die Gürtelteile 78a, 78b auf den Boden abgesenkt, so dass von außen der Blick auf das Fahrwerk 16 und die Laufrollen 18 verhindert ist.

Auch die Bewegung des Sichtgürtels 78 bzw. der Gürtelteile 78a, 78b zwischen der Betriebsstellung und der Transportstellung kann manuell oder durch Stellmotoren M erfolgen, die abermals nur in Figur 1 angedeutet sind.

Die Schweißvorrichtung 10 umfasst außerdem eine Bremseinrichtung 82, durch welche die Schweißvorrichtung 10 an einem Standort fixiert werden kann, wenn sich die Schweißvorrichtung 10 in ihrer Transportkonfiguration befindet, insbesondere bevor das Bodenpodest 56 in seine Betriebsstellung gebracht wurde.

Hierzu ist beim vorliegenden Ausführungsbeispiel am Fahrwerk 16 und innerhalb von dessen lichter Kontur 22 ein Stützstempel 84 gelagert, der mit Hilfe eines Kurbelmechanismus 86 angehoben oder abgesenkt werden kann. Der Kurbelmechanismus 86 umfasst eine Handkurbel 88, die über den hinteren Konturabschnitt 22c des Fahrwerks 16 übersteht und von außen zugänglich ist, wenn das Bodenpodest 56 seine Transportstellung einnimmt. Statt des Kurbelmechanismus 86 kann auch zum Anheben oder Absenken des Stützstempels 84 ein Stellmotor vorgesehen sein, der hier jedoch nicht eigens gezeigt ist.

Wenn der Stützstempel 84 in Richtung auf den Boden abgesenkt wird, kann das Fahrwerk 16 gegenüber dem Boden angehoben werden, bis die Laufrollen 18 denn Rollkontakt zum Boden verlieren und das Fahrwerk 16 über den Stützstempel 84 auf dem Boden ruht. Die Laufrollen 18 müssen dabei nicht vollständig vom Boden abgehoben werden, sondern können noch als Stützen dazu beitragen, dass die Schweißstation 12 zunächst stabil steht und nicht kippelt.

Bei einer nicht eigens gezeigten Abwandlung kann die Halteeinrichtung 82 auch durch eine Mechanik ausgebildet sein, mit deren Hilfe das Fahrwerk 16 gegenüber den Laufrollen 18 abgesenkt werden kann und dann auf dem Boden aufliegt.

Zusammengefasst funktioniert die Schweißstation 12 nun wie folgt:
Als Ausgangssituation sei die Transportkonfiguration der Schweißstation 12 nach Figur 5 angenommen, wobei auch der Sichtgürtel 78 vollständig seine angehobene Transportstellung einnimmt. Die Schutzscheibe 34 ist in das Aufnahmegehäuse 38 abgesenkt und die Regalmodule 52 sind in ihre Transportstellung in den Innenbereich 44 eingeklappt. Das Bodenpodest 56 nimmt seine nach oben geschwenkte Transportstellung ein, so dass dessen Sichtabdeckung 62 erkennbar ist. Der Geländerbügel 64 steckt in den Aufnahmeöffnungen 70 der Umlaufblende 68 und den Führungen 70a. Der Stützstempel 84 der Bremseinrichtung 82 ist angehoben, so dass die Schweißstation 12 auf den Lenkrollen 20 verfahren werden kann. In den Nutzräumen 46 der Containerelemente 42 sind die für den gewünschten Schweißprozess benötigten Geräte und Komponenten untergebracht.

In dieser Transportkonfiguration kann die Schweißstation 12 verladen und transportiert werden.

Am Bestimmungsort wird die Schweißstation 12 dann in dieser Transportkonfiguration an die gewünschte Position geschoben, in der die Schweißstation 12 betrieben werden soll. Dort wird zunächst die Bremseinrichtung 82 aktiviert und der Stützstempel 84 abgesenkt, indem die Handkurbel 88 des Kurbelmechanismus 86 manuell betätigt wird. Die Handkurbel 88 ist unterhalb des hochgeklappten Bodenpodestes 56 zugänglich und lediglich auf Grund des in Figur 5 gewählten Blickwinkels nicht zu erkennen.

Wenn die Schweißstation 12 auf diese Weise gegen ein Wegrollen gesichert ist, wird der Sichtgürtel 78 abgesenkt und das Bodenpodest 56 auf den Boden abgeklappt. Dabei kann der Geländerbügel 64 in den Aufnahmeöffnungen 70 als Griff genutzt werden. Der Geländerbügel 64 wird dann in horizontaler Richtung aus den Aufnahmeöffnungen 70 der Umlaufblende 68 und den Führungen 70a herausgezogen und in vertikaler Richtung in die Einstecköffnungen 66 in der Trittplatte 60 des Bodenpodestes 56 eingesteckt.

Dann werden die Regalmodule 52 aus dem Innenbereich 44 der Schweißstation 12 heraus in ihre Betriebsstellung geschwenkt und die Schutzscheibe 34 aus dem Aufnahmegehäuse 38 in ihre Betriebsstellung heraus gefahren.

Nun ist die Schweißstation 12 in ihrer unter anderem in Figur 1 gezeigten Betriebskonfiguration, in der ein Arbeitsbereich 90 zur Verfügung steht, in dem sich eine Person bei der Durchführung von Schweißarbeiten aufhält. Dieser Arbeitsbereich 90 ist weitgehend durch die Schutzscheibe 34, die Arbeitsplatte 28, den zugänglichen Bereich der Bodenplatte 24, die Trittplatte 60 des Bodenpodestes 56 sowie die Containerelemente 42 und die Regalmodule 52 definiert. Von diesen Bauteilen sind wiederum die Schutzscheibe 34, die Regalmodule 52, das Bodenpodest 56 mit dem Geländerbügel 64 und der Sichtgürtel 78 mit seinen zwei Gürtelteilen 78a, 78b solche Bauteile der Schweißvorrichtung 10, die diesen Arbeitsbereich 90 definieren und zumindest bereichsweise begrenzen und derart beweglich gelagert sind, dass die Bauteile jeweils zwischen einer Transportstellung und einer Betriebsstellung verstellbar sind.

Die Trittplatte 60 des Bodenpodests 56 begrenzt einen Großteil des Arbeitsbereichs 90, wenn das Bodenpodest 56 in seine Betriebsstellung bewegt wird. Die von der Schweißvorrichtung 10 in der horizontalen benötigte Fläche wird beträchtlich kleiner, wenn das Bodenpodest 56 aus seiner Betriebsstellung in seine Transportstellung bewegt wird.

Als Bezugskomponenten der Bewegung kann beispielsweise das Fahrwerk 16 dienen, d.h., dass diese Bauteile jeweils bezogen auf das Fahrwerk 16 zwischen einer Transportstellung und einer Betriebsstellung verstellbar sind.

Die Leitungen 74 werden noch vor Ort mit den jeweiligen Quellanschlüssen verbunden und das benötigte Schweißequipment aus den Containerelementen 42 entnommen. Ein zusätzlich erforderliches Absaugsystem wird vor Ort installiert.

Wenn nun Schweißarbeiten im Schweißbereich 30 der Arbeitplatte 28 durchgeführt werden, können Beobachter auf der anderen Seite der Schutzscheibe 34 stehen und durch diese hindurch gefahrlos in die Schweißflamme blicken und den Schweißvorgang verfolgen.

Wenn die Schweißstation 12 wieder von ihrem Standort entfernt werden soll, werden entsprechend zunächst alle losen Geräte abmontiert und verstaut. Dann wird die Schweißstation 12 aus ihrer Betriebskonfiguration in ihre Transportkonfiguration verbracht, indem die beweglichen Bauteile, d.h. die Schutzscheibe 34, die Regalmodule 52, das Bodenpodest 56 und der Sichtgürtel 78, aus ihrer Betriebsstellung in ihre Transportstellung verstellt und dort arretiert werden. Bei dem Bodenpodest 56 wird zunächst der Geländerbügel 64 abgenommen und in die Aufnahmeöffnungen 70 der Umlaufblende 68 und die Führungen 70a eingesteckt. Erst danach wird das Bodenpodest 56 hochgeklappt.

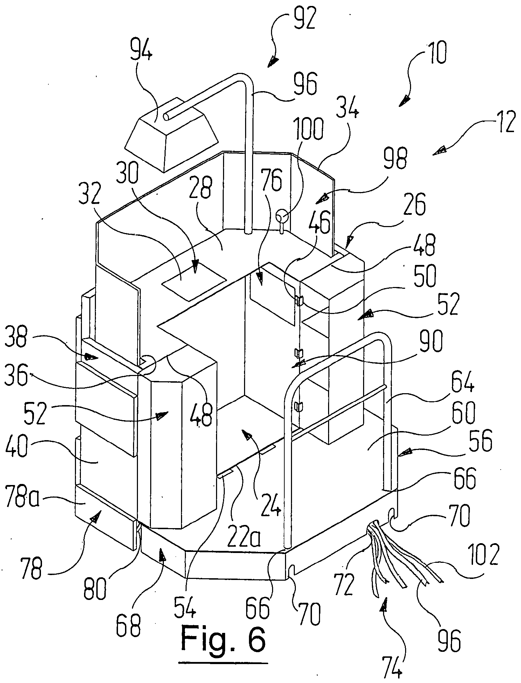

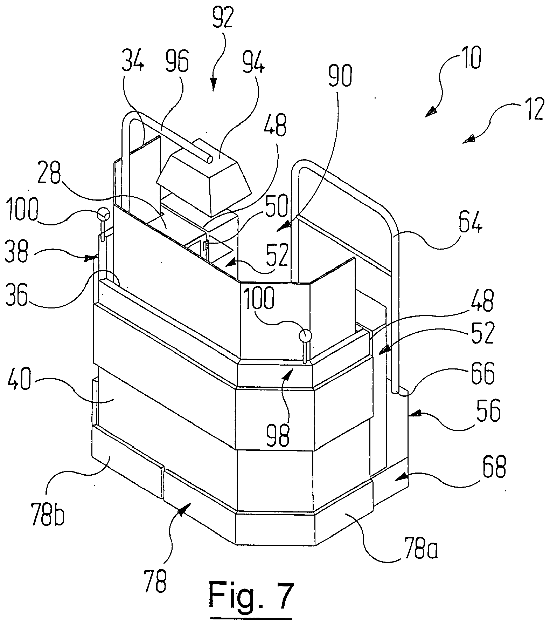

Die Figuren 6 und 7 zeigen als zweites Ausführungsbeispiel einer Schweißvorrichtung 10 eine Schweißstation 12, welche alle Komponenten und Bauteile der Schweißstation 12 nach den Figuren 1 bis 5 umfasst, die auch das jeweils gleiche Bezugszeichen tragen.

Außerdem führt die Schweißstation 12 ein Absaugmittel 92 mit sich, welches zumindest eine Absaughaube 94 und eine damit verbundene Absaugleitung 96 umfassen, die durch den Durchgang 72 im Bodenpodest 56 geführt ist und an eine zentrale Absauganlage angeschlossen werden kann. Bei einer Abwandlung können auch alle erforderlichen Komponenten für ein Absaugsystem in den Containerelementen 42 untergebracht sein.

Darüber hinaus umfasst die Schweißstation 12 noch ein Kamerasystem 98 mit einer oder mehreren Kameras 100, die für Aufnahmen von Schweißflammen geeignet sind und hierzu entsprechende Filtereinrichtungen umfassen. Die Kameras 100 können sowohl im Arbeitsbereich 90, beispielsweise an der Arbeitsplatte 28, als auch jenseits der Schutzscheibe 34 außerhalb des Arbeitsbereichs 90 an dem Arbeitsaufbau 26 angebracht sein. In letzterem Fall kann gegebenenfalls auf die genannten Filtereinrichtungen verzichtet werden, da eine Filterwirkung für die Kameras 100 bereits durch die Schutzscheibe 34 bewirkt wird.

Das Kamerasystem 98 gibt seine Signale über eine Leitung 102 aus, die wieder durch den Durchgang 72 im Bodenpodest 56 geführt ist. Bei einer Abwandlung kann das Kamerasystem 98 auch drahtlos kommunizieren.

Durch die Kameras 100 kann der Schweißvorgang einem größeren Publikum visuell zugänglich gemacht werden, indem die aufgezeichneten Bilder an einem anderen Ort auf einem Monitor wiedergegeben werden.

## Patentansprüche

1. Schweißvorrichtung mit einem Fahrwerk (16), welches Laufrollen (18) lagert, auf denen die Schweißvorrichtung verfahrbar ist,
wobei
die Schweißvorrichtung aus mehreren Bauteilen (34, 52, 56, 78) aufgebaut ist, die in einer Betriebskonfiguration der Schweißvorrichtung einen Arbeitsbereich (90) definieren und zumindest bereichsweise begrenzen und derart beweglich gelagert sind, dass die Bauteile (34, 52, 56, 78) jeweils zwischen einer Transportstellung und einer Betriebsstellung verstellbar sind,
**dadurch gekennzeichnet, dass**
die beweglichen Bauteile (34, 52, 56, 78) eine Schutzscheibe (34) umfassen, welche in eine Transportstellung absenkbar und in eine Betriebsstellung anhebbar ist, in der sie einen Schweißbereich (30) teilweise umgibt.

2. Schweißvorrichtung nach Anspruch 1, dass wenigstens eines der beweglichen Bauteile (34, 52, 56, 78) in seiner Betriebsstellung über die lichte Kontur (22) des Fahrwerks (16) hinausragt und in seiner Transportstellung innerhalb der lichten Kontur (22) des Fahrwerks (16) angeordnet ist.

3. Schweißvorrichtung nach Anspruch 1 oder 2, **dadurch gekennzeichnet, dass** die Schutzscheibe (34) in ihrer Transportstellung in einem Aufnahmegehäuse (38) untergebracht ist, aus welchem sie in ihre Betriebsstellung herausfahrbar ist.

4. Schweißvorrichtung nach einem der Ansprüche 1 bis 3,
**dadurch gekennzeichnet, dass** die beweglichen Bauteile (34, 52, 56, 78) wenigstens ein Regalmodul (52) umfassen.

5. Schweißvorrichtung nach Anspruch 4, **dadurch gekennzeichnet, dass** das wenigstens eine Regalmodul (52) in seiner Betriebsstellung über die lichte Kontur (22) des Fahrwerks (16) hinausragt und in seiner Transportstellung innerhalb der lichten Kontur (22) des Fahrwerks (16) angeordnet ist.

6. Schweißvorrichtung nach einem der Ansprüche 1 bis 5,
**dadurch gekennzeichnet, dass** die beweglichen Bauteile (34, 52, 56, 78) ein verschwenkbar gelagertes Bodenpodest (56) umfassen.

7. Schweißvorrichtung nach Anspruch 6, **dadurch gekennzeichnet, dass** das Bodenpodest (56) an dem Fahrwerk (16) um eine horizontale Achse verschwenkbar gelagert ist,

8. Schweißvorrichtung nach Anspruch 6 oder 7, **dadurch gekennzeichnet, dass** ein Geländerbügel (64) vorgesehen ist, der lösbar mit dem Bodenpodest (56) verbindbar ist.

9. Schweißvorrichtung nach einem der Ansprüche 1 bis 8,
**dadurch gekennzeichnet, dass** die beweglichen Bauteile (34, 52, 56, 78) einen Sichtgürtel (78) umfassen, welcher in seiner Betriebsstellung derart angeordnet ist, dass von außen der Blick auf das Fahrwerk (16) und die Laufrollen (18) verhindert ist.

10. Schweißvorrichtung nach Anspruch 9, **dadurch gekennzeichnet, dass** der Sichtgürtel (78) mindestens zwei Gürtelteile (78a, 78b) umfasst.

11. Schweißvorrichtung nach einem der Ansprüche 1 bis 10,
**dadurch gekennzeichnet, dass** eine Bremseinrichtung (80) vorhanden ist, durch welche die Schweißvorrichtung an einem Standort fixierbar ist, wenn sich die Schweißvorrichtung in ihrer Transportkonfiguration befindet.

12. Schweißvorrichtung nach Anspruch 11, **dadurch gekennzeichnet, dass** die Bremseinrichtung (80) einen Stützstempel (84) umfasst, der anhebbar oder absenkbar gelagert ist.

13. Schweißvorrichtung nach Anspruch 12, **dadurch gekennzeichnet, dass** der Stützstempel (84) an dem Fahrwerk (16) innerhalb von dessen lichter Kontur (22) gelagert ist.

14. Schweißvorrichtung nach Anspruch 12 oder 13, **dadurch gekennzeichnet, dass** der Stützstempel (84) mittels eines Kurbelmechanismus (86) anhebbar oder absenkbar ist.

15. Schweißvorrichtung nach Anspruch 13 und 14, **dadurch gekennzeichnet, dass** der Kurbelmechanismus (86) eine Handkurbel (88) umfasst, welche über die lichte Kontur (22) des Fahrwerks (16) hinausragt.

16. Schweißvorrichtung nach einem der Ansprüche 1 bis 15,
**dadurch gekennzeichnet, dass** die Schweißvorrichtung Absaugmittel (92) oder ein Absaugsystem mit sich führt.

17. Schweißvorrichtung nach einem der Ansprüche 1 bis 16,
**dadurch gekennzeichnet, dass** ein Kamerasystem (98) vorhanden ist, mittel dessen Aufnahmen von einem Schweißbereich (30) erzeugbar sind.

## Claims

1. Welding device with a chassis (16), which bears running rollers (18), on which the welding device can be moved along,
wherein
the welding device is made up of a number of components (34, 52, 56, 78), which in an operating configuration of the welding device define and delimit at least in certain regions a working area (90) and are movably mounted in such a way that the components (34, 52, 56, 78) are in each case adjustable between a transporting position and an operating position,
**characterized in that**
the movable components (34, 52, 56, 78) comprise a protective plate (34), which can be lowered into a transporting position and can be raised into an operating position, in which it partially surrounds a welding area (30).

2. Welding device according to Claim 1, that at least one of the movable components (34, 52, 56, 78) in its operating position protrudes beyond the outer contour (22) of the chassis (16) and in its transporting position is arranged within the outer contour (22) of the chassis (16).

3. Welding device according to Claim 1 or 2, **characterized in that** the protective plate (34) in its transporting position is accommodated in a receiving housing (38), from which it can be moved out into its operating position.

4. Welding device according to one of Claims 1 to 3, **characterized in that** the movable components (34, 52, 56, 78) comprise at least one rack module (52).

5. Welding device according to Claim 4, **characterized in that** the at least one rack module (52) in its operating position protrudes beyond the outer contour (22) of the chassis (16) and in its transporting position is arranged within the outer contour (22) of the chassis (16).

6. Welding device according to one of Claims 1 to 5, **characterized in that** the movable components (34, 52, 56, 78) comprise a pivotably mounted bottom stand (56).

7. Welding device according to Claim 6, **characterized in that** the bottom stand (56) is mounted on the chassis (16) pivotably about a horizontal axis.

8. Welding device according to Claim 6 or 7, **characterized in that** a guardrail (64), which can be releasably connected to the bottom stand (56) is provided.

9. Welding device according to one of Claims 1 to 8, **characterized in that** the movable components (34, 52, 56, 78) comprise a screening strip (78), which in its operating position is arranged in such a way as to prevent the chassis (16) and the running rollers (18) from being seen from the outside.

10. Welding device according to Claim 9, **characterized in that** the screening strip (78) comprises at least two strip parts (78a, 78b).

11. Welding device according to one of Claims 1 to 10, **characterized in that** there is a braking mechanism (80), by which the welding device can be fixed at a location when the welding device is in its transporting configuration.

12. Welding device according to Claim 11, **characterized in that** the braking mechanism (80) comprises a supporting pad (84), which is mounted such that it can be raised or lowered.

13. Welding device according to Claim 12, **characterized in that** the supporting pad (84) is mounted on the chassis (16) within the outer contour (22) thereof.

14. Welding device according to Claim 12 or 13, **characterized in that** the supporting pad (84) can be raised or lowered by means of a crank mechanism (86).

15. Welding device according to Claim 13 and 14, **characterized in that** the crank mechanism (86) comprises a hand crank (88), which protrudes beyond the outer contour (22) of the chassis (16).

16. Welding device according to one of Claims 1 to 15, **characterized in that** the welding device carries with it suction extraction means (92) or a suction extraction system.

17. Welding device according to one of Claims 1 to 16, **characterized in that** there is a camera system (98), by means of which pictures of a welding area (30) can be produced.

## Revendications

1. Dispositif de soudage, avec un châssis (16) qui porte des roulettes (18) sur lesquelles le dispositif de soudage peut être déplacé,
sachant que le dispositif de soudage est constitué de plusieurs éléments (34, 52, 56, 78) qui, dans une configuration de fonctionnement du dispositif de soudage, définissent une zone de travail (90) et la délimitent au moins sectoriellement, et qui sont montés mobiles de telle sorte que les éléments (34, 52, 56, 78) peuvent être respectivement déplacés entre une position de transport et une position de fonctionnement,
**caractérisé en ce que** les éléments mobiles (34, 52, 56, 78) comprennent un écran de protection (34) qui peut être abaissé dans une position de transport et relevé dans une position de fonctionnement dans laquelle il entoure partiellement une zone de soudage (30).

2. Dispositif de soudage selon la revendication 1, **caractérisé en ce qu'**au moins un des éléments mobiles (34, 52, 56, 78) dépasse dans sa position de fonctionnement du contour libre (22) du châssis (16) et est disposé dans sa position de transport à l'intérieur du contour libre (22) du châssis (16).

3. Dispositif de soudage selon la revendication 1 ou 2, **caractérisé en ce que** l'écran de protection (34) est logé dans sa position de transport dans un carter récepteur (38), duquel il peut être sorti dans sa position de fonctionnement.

4. Dispositif de soudage selon l'une des revendications 1 à 3, **caractérisé en ce que** les éléments mobiles (34, 52, 56, 78) comprennent au moins un module casier (52).

5. Dispositif de soudage selon la revendication 4, **caractérisé en ce que** le module casier au moins unique (52) dépasse dans sa position de fonctionnement du contour libre (22) du châssis (16) et est disposé dans sa position de transport à l'intérieur du contour libre (22) du châssis (16).

6. Dispositif de soudage selon l'une des revendications 1 à 5, **caractérisé en ce que** les éléments mobiles (34, 52, 56, 78) comprennent un socle (56) monté à pivotement.

7. Dispositif de soudage selon la revendication 6, **caractérisé en ce que** le socle (56) est monté sur le châssis (16) à pivotement autour d'un axe horizontal.

8. Dispositif de soudage selon la revendication 6 ou 7, **caractérisé en ce qu'**il est prévu un arceau garde-corps (64), qui peut être relié de manière amovible au socle (56).

9. Dispositif de soudage selon l'une des revendications 1 à 8, **caractérisé en ce que** les éléments mobiles (34, 52, 56, 78) comprennent une ceinture formant cache (78), qui est disposée dans sa position de fonctionnement de telle sorte qu'elle empêche la vue de l'extérieur sur le châssis (16) et les roulettes (18).

10. Dispositif de soudage selon la revendication 9, **caractérisé en ce que** la ceinture formant cache (78) comprend au moins deux parties de ceinture (78a, 78b).

11. Dispositif de soudage selon l'une des revendications 1 à 10, **caractérisé en ce qu'**un équipement de freinage (80) est présent, par lequel le dispositif de soudage peut être immobilisé à un emplacement lorsque le dispositif de soudage se trouve dans sa configuration de transport.

12. Dispositif de soudage selon la revendication 11, **caractérisé en ce que** l'équipement de freinage (80) comprend un vérin d'appui (84) qui est monté en pouvant être relevé ou abaissé.

13. Dispositif de soudage selon la revendication 12, **caractérisé en ce que** le vérin d'appui (84) est monté sur le châssis (16) à l'intérieur du contour libre (22) de ce dernier.

14. Dispositif de soudage selon la revendication 12 ou 13, **caractérisé en ce que** le vérin d'appui (84) peut être relevé ou abaissé au moyen d'un mécanisme à manivelle (86).

15. Dispositif de soudage selon les revendications 13 et 14, **caractérisé en ce que** le mécanisme à manivelle (86) comprend une manivelle (88) qui dépasse du contour libre (22) du châssis (16).

16. Dispositif de soudage selon l'une des revendications 1 à 15, **caractérisé en ce que** le dispositif de soudage emporte avec lui des moyens d'aspiration (92) ou un système d'aspiration.

17. Dispositif de soudage selon l'une des revendications 1 à 16, **caractérisé en ce qu'**il est prévu un système vidéo (98) qui permet de produire des prises de vue d'une zone de soudage (30).
